# EUROPEAN PATENT SPECIFICATION

(11) **EP 3 117 711 B1**
(45) Date of publication and mention of the grant of the patent: **12.02.2020**
(21) Application number: 16177769.3
(22) Date of filing: 04.07.2016
(51) Int. Cl.: B65G 45/22, B65G 45/24, A22B 7/00

(54) **SELF-CLEANING CONVEYOR AND METHOD FOR OPERATING THE SAME**
SELBSTREINIGENDER FÖRDERER UND VERFAHREN ZUM BETRIEB DAVON
CONVOYEUR AUTO-NETTOYANT ET SON PROCÉDÉ DE FONCTIONNEMENT

(30) Priority: 15.07.2015 NL 2015174
(43) Date of publication of application: 18.01.2017
(73) Proprietor: Marel Stork Poultry Processing B.V., 5831 AV Boxmeer (NL)
(72) Inventor: VAN DER EERDEN, Henricus Franciscus Jacobus Maria, 5831 AV Boxmeer (NL); VAN ESBROECK, Maurice Eduardus Theodorus, 5831 AV Boxmeer (NL); CLAESSENS, Roger Pierre Hubertus Maria, 5831 AV Boxmeer (NL); VAN MEIJL, Theodorus Mathias Helena, 5831 AV Boxmeer (NL)
(74) Representative: Algemeen Octrooi- en Merkenbureau B.V.

(56) References cited:
- EP-A1- 0 448 080
- KR-A- 20110 066 275
- US-A- 3 583 555
- US-A- 5 497 872
- US-A- 5 657 853
- US-A- 6 099 427
- US-B2- 8 978 875

## Description

The present invention relates to a self-cleaning conveyor for conveying food products, in particular meat or fish products, comprising an endless conveyor belt which is passed over a number of pulley means, cleaning means for cleaning the conveyor belt, the cleaning means comprising a cylindrical cleaning element which is rotatable in a direction of rotation about its central axis, against which the conveyor belt butts over the entire width with its outer side and underside, driving means for rotatably driving at least one pulley means and the cleaning element, wherein the cleaning element is circumferentially provided with outwardly oriented scraping edges extending parallel to each other for scraping off waste matter from the conveyor belt.

Such a conveyor is described in US publication US 5657853. In said document, coal, limestone and ore are mentioned as possible materials to be conveyed with the conveyor in question. Although it is also possible to convey meat or fish products with the conveyor in question, of course, the cleaning means are not suitable for cleaning the conveyor belt in a hygienically sound manner in that case.

A conveyor according to the first paragraph is further known from US 3583555. In this document coal, coke, chemicals, crushed stone, sand and the like are mentioned as possible materials to be conveyed with the conveyor in question.

Contrary to US 5657853 and US 3583555, US 8978875 B2 does refer to the conveyance of food products. This document describes a conveyor belt cleaner which is used for a conveyor belt at a grocery store. The cleaning device comprises a fluid dispensing device which dispenses fluid on the upstream end of the upper side of the conveyor belt as well as a wiping device downstream of the fluid dispensing device.

In the processing of meat or fish products, such as fillets or stomachs, it is known to have operations such as deboning but also visual inspection and cooling of the products take place while the product lies on an endless conveyor belt or at a processing location to which the products are conveyed by means of a conveyor belt. At one end of the conveyor in question, the products are placed on the upper, forward part of the conveyor belt, and at the opposite end of the conveyor in question, or possibly on the way thereto, they are removed from the upper part of the conveyor belt again. To prevent cross contamination it is desirable or even legally required that the conveyor belt be cleaned cyclically.

It is known to pass the conveyor belt through a cleaning bath during its lower return movement. It is further known to make use of stationary scrapers and rotating brushes which act mechanically on the low, return part of the conveyor belt so as to remove the dirt therefrom. Many meat or fish products leave behind a greasy layer on the conveyor belt, which appears to be difficult to remove cyclically using the aforesaid known cleaning means. Because of this, the risk of cross contamination increases.

The object of the invention is to provide a device as described in the introduction by means of which it is possible to provide a conveyor which is suitable for being used for conveying meat or fish products, wherein the conveyor belt can be properly cleaned, for example because the greasy layer that the meat or fish products can leave behind on the conveyor belt is completely or at least to a high degree removed from the conveyor belt by the cleaning means.

In order to achieve that object, the invention provides a self-cleaning conveyor as defined in claim 1 of the appended claims. A conveyor that is provided with such cleaning means is to a higher degree capable of removing in particular greasy sediment from the outer side of the conveyor belt. The cleaning fluid, such as clean tap water, can be used for discharging the waste matter. The further fluid supplying means can be effective in that regard especially for removing in particular microbiological impurities that may remain on the conveyor belt downstream of the cleaning element.

Both for constructional reasons and for functional reasons it is preferable if the scraping edges extend at least over the entire width of the conveyor belt.

Furthermore preferably, the scraping edges extend parallel to the central axis of the cleaning element, so that scraped-off waste matter will not exhibit a tendency to be moved sideways along the outer surface of the conveyor belt. The scraping edges extend rectilinearly in that case.

It is furthermore conducive to obtaining an effective cleaning result of the conveyor belt if the driving means drive the facing sides of the conveyor belt and the cleaning element in opposite directions in use. This can for example be realised by making use of a mechanical transmission between a pulley means and the cleaning element, in which case a single drive unit, such as an electric motor, will suffice. Alternatively it is also possible to make use of separate driving means for driving one or a number of pulley means and for driving the cleaning element. The latter variant has the advantage that there is no fixed ratio between the speed of the conveyor belt and that of the cleaning element.

It has been found that effective cleaning of the conveyor belt can take place in particular if the parallel scraping edges are spaced apart by a distance of between 1 mm and 10 mm, further preferably between 3 mm and 8 mm. Using a spacing of that magnitude, a good abutment of the conveyor belt against the scraping edges can be ensured.

Scraping off waste matter will be easier in particular if, seen in vertical cross-section, the scraping edges comprise a nib oriented in the direction of rotation of the cleaning element.

A highly effective result is obtained because, according to the invention, the fluid supplying means comprise a trough-like container for cleaning fluid, which container has a circumferential upright wall and which extends under the cleaning element, and wherein the bottom side of the cleaning element extends at a lower level than the upper side of the upright wall for immersing the bottom side of the cleaning element in the cleaning fluid in use. The scraping edges are thus rinsed in the cleaning fluid, so that the waste matter, insofar as it sticks to the cleaning element, can become detached therefrom.

In order to prevent the cleaning element from being immersed too deep in the cleaning fluid, it may be advantageous if the container is provided with an overflow edge for keeping the cleaning fluid in the container at the level of the overflow edge. The overflow edge may be formed by a part of the upright wall of the container, but it may also be a pipe, for example having an open upper end, which pipe is provided in the container and which is in communication with an outlet.

To eliminate or at least reduce the risk of scraped-off waste matter adhering to the surface of the cleaning element, the cleaning element is also provided with grooves extending between the scraping edges. In use, said grooves can function as buckets that pick up the cleaning fluid from the container and in which scraped-off waste matter can be received.

To eliminate or at least reduce the risk of cleaning fluid prematurely flowing from the grooves, the grooves are preferably closed at their ends.

It may furthermore be advantageous in that regard if the grooves are closed at their ends by a circumferential edge which also retains at least the part of the conveyor belt that butts against the cleaning element. The circular edge is thus also conducive to the correct running true of the conveyor.

Likewise in order to eliminate or at least reduce the risk of cleaning fluid prematurely flowing from the grooves, the grooves preferably extend parallel to the central axis of the cleaning element.

An advantageous embodiment of the further fluid supplying means can be obtained if a row of passages is provided in the wall of the supply member that surrounds the channel, which passages each extend from the channel to the outer side of the supply member and which are oriented in the direction of the conveyor belt.

To reduce the consumption of cleaning fluid and, in addition, eliminating or at least reducing the risk of the conveyor becoming wet in the direct vicinity of the further fluid supplying means (with the exception of course of the conveyor belt itself) as a result of the operation of the further fluid supplying means, it may be advantageous if the conveyor belt butts against the supply member.

A very effective cleaning result is also obtained because, according to the invention, the further fluid supplying means are at least in part provided directly above the cleaning element. Fluid from the further fluid supplying means can in that case drop directly onto the cleaning element. The further fluid supplying means thus also function as the fluid supplying means according to a possible embodiment of the invention as already discussed in the foregoing. In the case that the cleaning element is provided with grooves according to another possible embodiment of the invention as discussed in the foregoing, said grooves may at least in part be filled with cleaning fluid directly from the further fluid supplying means.

If a container according to a previously discussed possible embodiment of the conveyor according to the invention is used, it may be advantageous if the further fluid supplying means are provided directly above the container. The cleaning fluid from the further fluid supplying means will in that case at least in large part fall/drip into the container.

The invention provides advantages in particular if the conveyor belt is provided with cams on the inner side, which cams are arranged in a regular pattern and wherein at least one rotatably driven pulley means is provided with recesses in which the cams engage. Such conveyor belts can be tensionless and for that reason they can be attractive to use. The use of cams may involve hygienic risks, however, for which reason it may be disadvantageous, for example, to pass such a conveyor belt through a cleaning bath as is known with prior art self-cleaning conveyors. An advantage of the invention is that the invention obviates the need or even the advisability to pass the conveyor belt through a cleaning bath.

Within the latter framework, a further possibly advantageous embodiment of the invention is characterised in that the conveyor belt does not extend through a cleaning bath. Thus there is no risk, or at least a significantly smaller risk, of waste matter being moved from the outer side of the conveyor belt to the inner side of the conveyor belt. In addition, no extensive measures need to be taken for drying the conveyor belt.

The invention also provides a method for operating a conveyor according to the invention, wherein food products, in particular meat or fish products, are conveyed by the conveyor.

It may be preferable if the facing sides of the conveyor belt and the cleaning element move in opposite directions, which will lead to a better scraping result of the scraping edges on the conveyor belt.

It is also preferable to drive the cleaning element at an angular speed such that the absolute speed of the scraping edges ranges between 0.5 and 3.0 times the absolute speed of the conveyor belt, furthermore preferably between 1.0 and 2.0 times the absolute speed of the conveyor belt.

The invention will be explained in more detail hereinafter by means of a description of a possible embodiment, not to be interpreted as limiting, a self-cleaning conveyor according to the invention, in which reference is made to the following schematic figures, in which in some cases parts of the conveyor are not shown for the sake of clarity.
Figure 1 is a side view of a self-cleaning conveyor according to the invention;
Figure 2 is a perspective view of the cleaning unit that forms part of the self-cleaning conveyor of figure 1;
Figure 3 is a side view of the cleaning unit of figure 2;
Figure 4 is a perspective view of the cleaning unit of figure 2;
Figures 5a and 5b are perspective views of two alternative embodiments of a cleaning cylinder that forms part of or at least can form part of a cleaning unit according to figure 2.

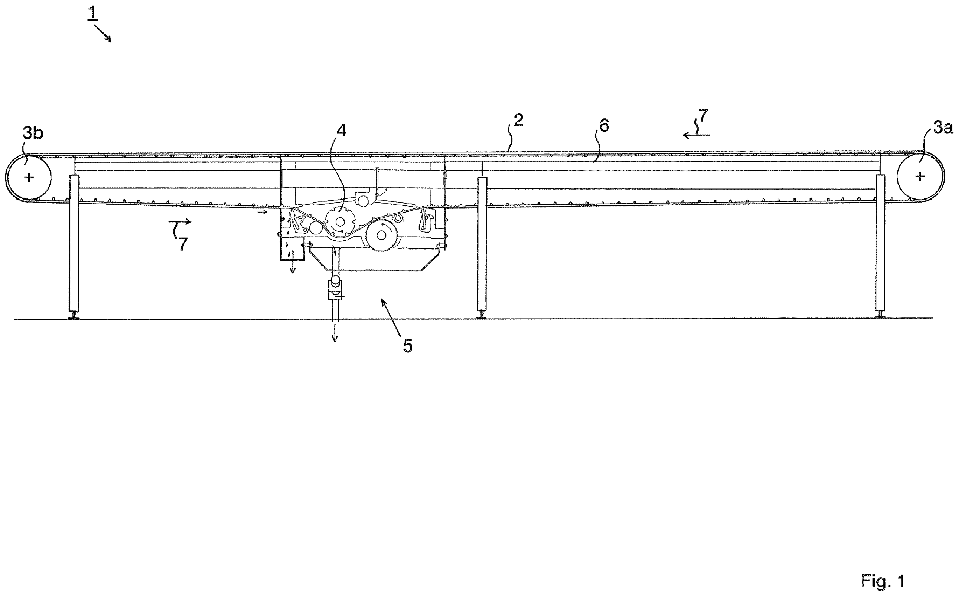

The self-cleaning conveyor 1 shown in figure 1 is used in the processing of food products, such as in particular meat or fish products. The conveyor 1 comprises an endless, flexible conveyor belt 2 that is passed over a cylindrical pulley means 3a, 3b and further, inter-alia, over a cylindrical driving element 4 that is provided on the inner side of the endless conveyor belt 2. Each one of the pulley means 3a, 3b and the driving element 4 may in fact also be configured as a number of spaced-apart identical wheels whose central axes coincide. The driving element 4 forms part of a cleaning unit 5 yet to be discussed in more detail. Alternatively, it is also possible that one of the pulley means 3a, 3b is driven and that the driving element 4 has been substituted for a pulley means.

The pulley means 3a, 3b are connected to a frame (not shown in detail) of the conveyor 1 for rotation about their respective central axes. The upper part of the conveyor belt 2 is supported along the larger part of its length on a support plate 6, which is connected to the frame, so that said upper part is suitable for supporting the aforesaid food products. Said food products can be processed, either manually or in an automated manner, while being conveyed in the conveying direction 7. Such processing may for example consist of cutting off pieces from the food products, whilst the food products in question may also be temporally removed from the conveyor belt 2 and be placed back on the conveyor belt 2 again after being processed. The conveyor belt 2 is made of a thermoplastic synthetic material and has a smooth outer side. On the inner side, the conveyor belt 2 is provided with regularly spaced ribs 8 extending transversely to the conveyor belt. Such conveyor belts are also referred to as "positive conveyor belts", which are for example supplied by the firm of Habasit under the name of Cleandrive™. Such conveyor belts are not tensioned in use. The driving element 4 is circumferentially provided with grooves 9, in which the ribs 8 engage. Rotatably driving the driving wheel 4 in the direction of rotation 10 achieves that the conveyor belt 2 is moved in the conveying direction 7. The pulley means 3a, 3b are also provided with grooves, such as the grooves 9.

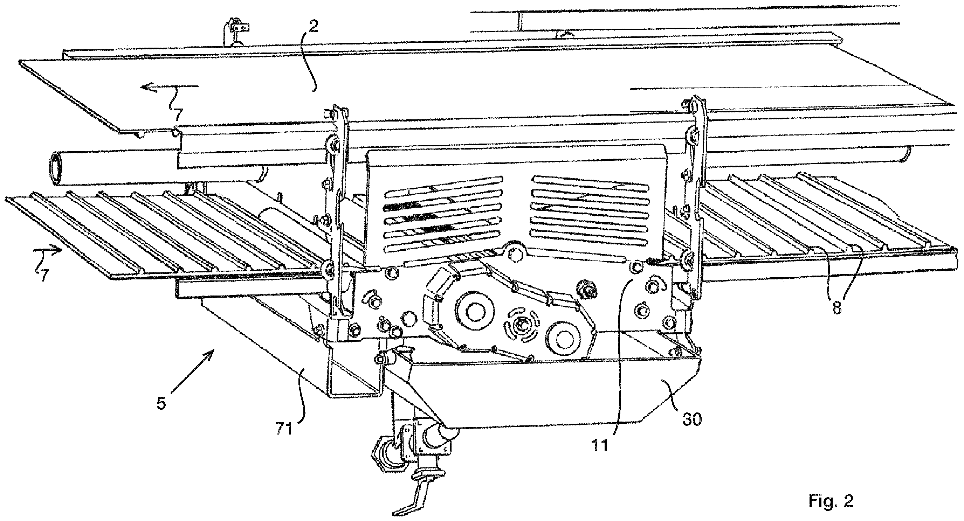

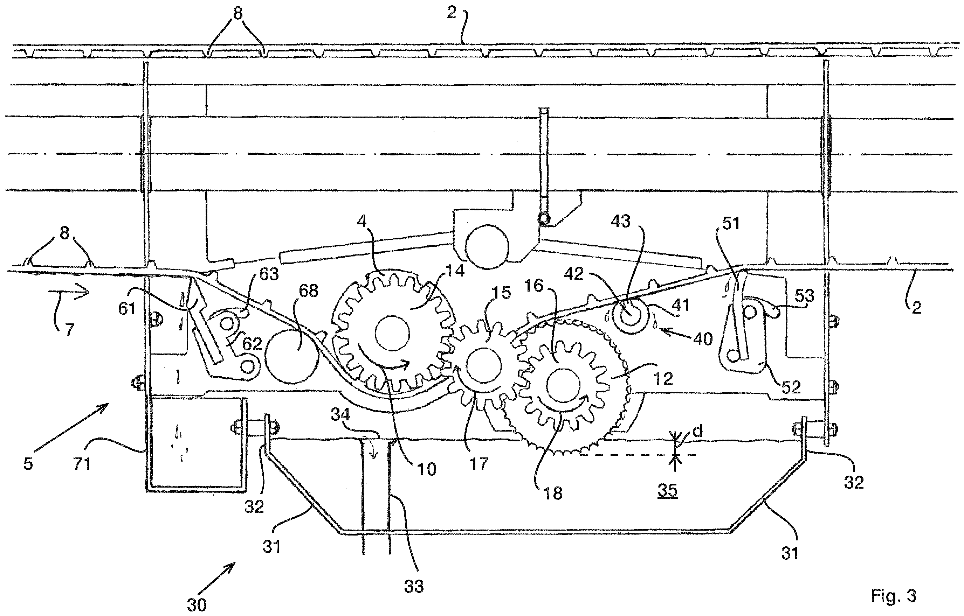

As already said before, the driving wheel 4 forms part of a cleaning unit 5, which is shown in more detail in figures 2 - 4. The cleaning unit 5 has a subframe that is mounted to the (main) frame of the conveyor 1. Unlike figures 3 and 4, figure 2 shows a guard 11 of the cleaning unit 5.

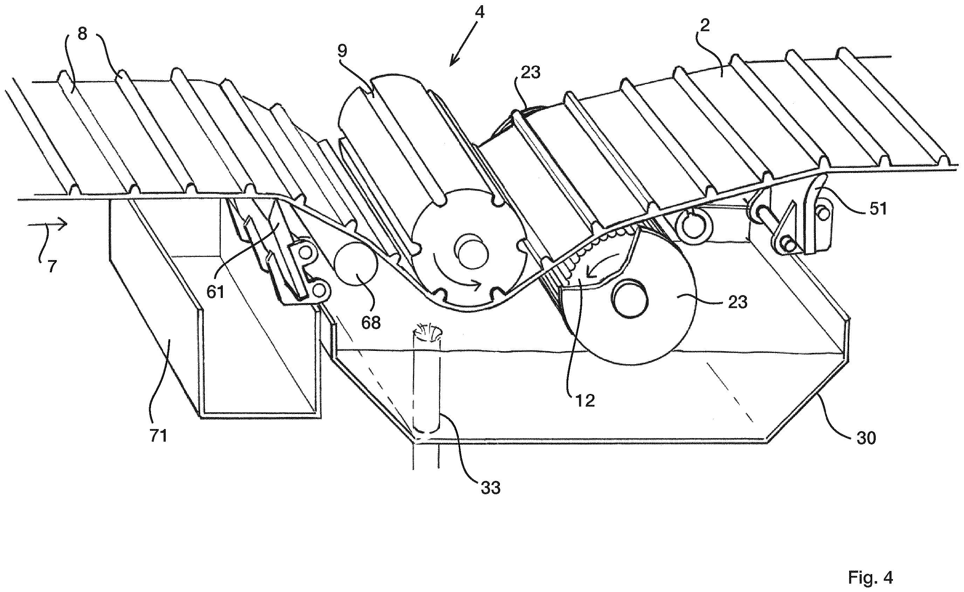

The cleaning unit 5 comprises a cleaning cylinder 12 under the (lower part of the) conveyor belt 2, the central axis of which cleaning cylinder extends horizontally, perpendicular to the longitudinal direction of the conveyor belt 2. Provided between the driving wheel 4 and the cleaning cylinder 12 is a gear transmission 13, which is hidden from view behind the guard 11 in figure 2 and which is not shown in figure 4. The gear transmission 13 comprises gears 14, 15 and 16 (figure 3), which are each rotatably connected to the subframe. The gear 14 is coaxial and rigidly connected to the driving element 4, whilst the gear 16 is coaxial and rigidly connected to the cleaning cylinder 12. When the driving element 4 is driven in the direction of rotation 10, the gear 14 will rotate in the same direction of rotation 10 as the driving element 4. The gear 15 will rotate in the opposite direction 17 and the gear 16 will rotate in the same direction of rotation 18. The conveyor belt 2 is to a limited extent passed over the cleaning cylinder 12 with its outer side in a part of the path of the conveyor belt 2 where the conveyor belt slopes upward, seen in the conveying direction. In use, the cleaning cylinder 12 and the conveyor belt 2 move in opposite directions relative to each other, in the region where they are in contact with each other, on account of the activity of the transmission 13. The transmission ratio of the transmission 13 can typically be selected so that the absolute speed of the outer side of the cleaning cylinder 12 is different from the absolute speed of the conveyor belt 2 by a factor ranging between 0.5 and 3.0, for example a factor of 1.3. A typical absolute speed of the conveyor belt 2 ranges between 1 meter per minute, for example if the conveyor belt 2 is used in a refrigerating plant, and 20 metres per minute, for example if the conveyor belt 2 is used for deboning products lying on the conveyor belt 2.

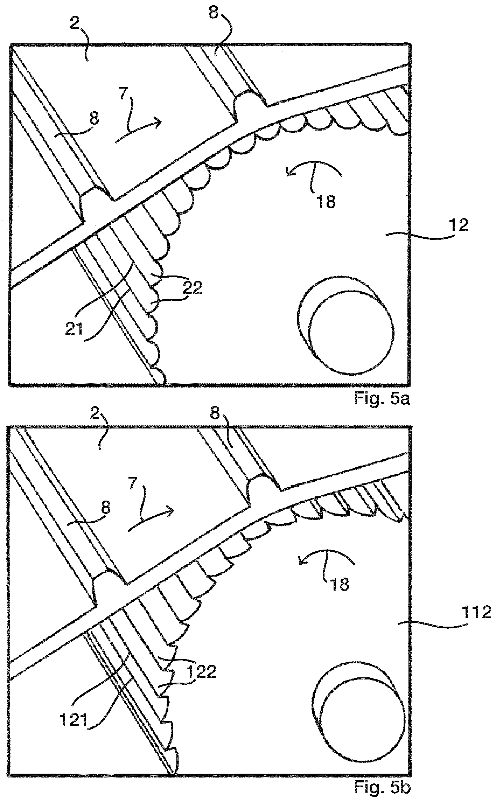

The cleaning cylinder 12 is profiled on the outer side, such that the cleaning cylinder 12 is provided with outwardly oriented, rigid scraping edges 21 extending parallel to each other, between which grooves 22 extending parallel to each other and to the central axis of the cleaning cylinder 12 are present (figure 5a). The length both of the scraping edges 21 and of the grooves 22 equals the (axial) length of the cleaning cylinder 12. The cleaning cylinder 12, which could be regarded as a thick-walled pipe, is at least substantially made of plastic material, into which the grooves 22 have been milled, thus forming scraping edges 21.

The scraping edges 21 are radially oriented relative to the cleaning cylinder 12. According to an alternative embodiment shown in figure 5b, it is also possible to dimension the scraping edges 121 of an alternative embodiment of a cleaning cylinder 112 so that they are oriented in downstream direction, which means that the apex angles (seen in cross-sectional view) defined by the scraping edges 121 are oriented slightly in the direction of rotation 18. The downstream orientation of the scraping edges 121 also influences the configuration of the grooves 122, as appears from a comparison between figures 5a and 5b. The scraping action of the scraping edges can be enhanced by orienting the apex angles thereof in downstream direction.

The (axial) length of the cleaning cylinder 12 is the same as the width of the conveyor belt 2. Two disc-shaped retaining plates 23 are provided at the two ends of the cleaning cylinder 12, the diameter of which retaining plates is slightly larger than that of the cleaning cylinder 12, so that the conveyor belt 2 passes between the two retaining plates and is retained by said retaining plates. The opposite ends of each one of the grooves 22 are thus closed by the retaining plates 23. The retaining plates 23 could also form an integral part with the cleaning cylinder 12.

At the bottom side, the cleaning unit 5 is provided with a trough-like container 30 having a bottom 32 and sloping and straight upright walls 31, 32. The container 30 is further provided with an overflow pipe 33 having an open upper end 34. The overflow pipe 33 extends through the bottom 32. The upper end 34 is spaced from the bottom side of the cleaning cylinder 12 by a distance d, for example typically in the order of 10 mm. The spacing d typically ranges between 0% and 30% of the diameter of the cleaning cylinder 12. In use, the container 30 is filled to the level of the end 34 with cleaning fluid 35, which may typically be ordinary tap water, wherein the bottom side of the cleaning cylinder 12 extends into the fluid 35 on account of the spacing d.

The cleaning unit 5 further comprises a cleaning pipe 14, downstream of the cleaning cylinder 12, which cleaning pipe extends perpendicular to the longitudinal direction of the conveyor belt 2 over the entire width thereof. The cleaning pipe 40 has a cylindrical wall 41 and an internal channel 42. Provided in the wall 43 is a row extending in the longitudinal direction of the cleaning pipe 40 of regularly spaced bores 43, which bores are oriented in the direction of the outer side of the conveyor belt 2, wherein the conveyor belt 2 closes the bores 43 from the outer side. As an alternative to the bores 43, one slot extending in the longitudinal direction of the cleaning pipe 40 or a number of aligned slots could be provided in the wall 43. The cleaning pipe 40 is provided above the container 30 and in part also above the cleaning cylinder 12.

Downstream of the cleaning pipe 40, under the conveyor belt 2, the cleaning unit 5 comprises a flexible scraper 51 of a resilient material, for example rubber, which scraper extends over the entire width of the conveyor belt 2, biased in a slightly downstream orientation against the conveyor belt 2, and which is mounted in the holder body 52. The holder body 52 is adjustably connected to the subframe of the cleaning unit 5, to which end the cleaning unit 5 is provided with a curved adjusting slot 53. The flexible scraper 51, too, is disposed above the container 30.

The cleaning unit 5 is further provided with a relatively rigid scraper 61, which extends over the entire width of the conveyor belt 2, in a slightly upstream orientation against the conveyor belt 2, and which is mounted in the holder body 62. The holder body 62 is adjustable relative to the subframe of the cleaning unit, to which end the subframe is provided with a curved adjusting slot 63. The cleaning unit 5 comprises a discharge chute 71 under the rigid scraper 61, which discharge chute is oriented transversely to the conveyor belt 2.

To conclude, it is furthermore noted with regard to the various parts of the cleaning unit 5 that it is provided with a pulley means 68, which is disposed slightly upstream of the driving element 4 at the bottom side of the conveyor belt 2 for effecting a good mutual engagement between the conveyor belt 2 and the driving element 4, as does the cleaning cylinder 12 for that matter.

The self-cleaning conveyor 1 functions as follows: Near the pulley means 3a, food products, such as meat or fish products, for example fillets, are placed on the conveyor belt 2 at the upstream end of the upper part of the conveyor belt 2. Personnel are present beside the conveyor belt 2 for processing the food products in question, for example cutting off fat. At the downstream end of the upper part of the conveyor belt 2, or sooner already, the processed food products are subsequently removed from the conveyor belt 2 again. Because the food products have been in contact with the conveyor belt 2, and possibly as a result of the processing operations carried out on the food products, waste matter, for example greasy deposit, has accumulated on the conveyor belt 2. This waste matter is removed by the cleaning unit in the lower part of the conveyor belt 2. To that end the rigid scraper 61 first scrapes the coarse waste matter from the upper side of the conveyor belt 2. This coarse waste matter drops into the discharge chute 71. To discharge this waste matter in the discharge chute 71, a small liquid flow can be used in the discharge chute 71, in which case the discharge chute 71 will slope down slightly. Alternatively, a conveyor belt or the like may be provided on the bottom of the discharge chute 71. The conveyor belt 2 is then subjected to the action of the cleaning cylinder 12. Upon rotation, the scraping edges 21 scrape along the outer side of the conveyor belt 2, thus scraping off also smaller pieces of fat and greasy deposit from the conveyor belt. Because the cleaning cylinder 12 rotates through the fluid 35 in the container with its bottom side, the grooves 22 will be filled with fluid to a slight extent. The grease scraped off by the scraping edges 21 will be absorbed by the fluid in the grooves 22 or at least keep afloat therein, so that it will hardly (if at all) tend to adhere to the surface of the cleaning cylinder 12. After scraping by the scraping edges 21 has taken place, the fluid in the grooves 22 with the scraped-off grease or at least the scraped-off waste matter present therein will drop into the fluid 35 in the container 13. The greasy deposit will keep afloat and will be discharged via the overflow pipe 33 in the case of a continuous supply of fluid to the container 13.

The latter supply in any case takes place via, inter alia, the cleaning pipe 40. Clean tap water is supplied to the channel 42, which water is squirted against the conveyor belt 2 via the bores 43, thus forming a fluid film between the outer side of the wall 41 and the conveyor belt 2. From the cleaning pipe 40, at least part of this fluid will drop into the grooves 22, which are thus filled with relatively fresh water, whilst the remaining part will drop into the container 30, so that the latter is filled up with fluid. The action of the cleaning pipe 40 achieves that any remaining waste matter is removed from the conveyor belt 2.

The flexible scraper 51, to conclude, acts as a kind of chamois for drying the surface of the conveyor belt 2 again. Fluid will also drop into the container 30 from the flexible scraper 51. Downstream of the scraper 51, the conveyor belt 2 will be sufficiently clean for conveying new products again upon making its next upper stroke.

## Claims

1. A self-cleaning conveyor (1) for conveying meat or fish products, comprising an endless conveyor belt (2) which is passed over a number of pulley means (3a, 3b), cleaning means (5) for cleaning the conveyor belt, the cleaning means comprising a cylindrical cleaning element (12) which is rotatable in a direction of rotation about its central axis, against which the conveyor belt butts over the entire width with its outer side and underside, driving means (4) for rotatably driving at least one pulley means and the cleaning element, wherein the cleaning element is circumferentially provided with outwardly oriented scraping edges (21; 121) extending parallel to each other for scraping off waste matter from the conveyor belt, wherein the cleaning means further comprise fluid supplying means (30) for supplying cleaning fluid to the cleaning element, wherein the cleaning element is also provided with grooves (22; 122) extending between the scraping edges (21; 121),
**characterized in that**
the cleaning means also comprise further fluid supplying means (40) for supplying cleaning fluid downstream of the cleaning element against the full width of the conveyor belt at the outer side and the underside thereof, which further fluid supplying means comprise a tubular supply member that butts against the conveyor belt over the full width thereof, in the interior of which supply member a channel (42) is present, wherein at least one passage (43) is provided in the wall of the supply member that surrounds the channel, which passage extends from the channel to the outer side of the supply member and which is oriented in the direction of the conveyor belt, wherein the further fluid supplying means are at least in part provided directly above the cleaning element (12),
**in that** the cleaning means also comprising a flexible scraper (51) provided under the conveyor belt, downstream of the tubular supply member, for drying the conveyor belt,
and **in that** the fluid supplying means comprise a trough-like container (30) for cleaning fluid, which container has a circumferential upright wall and which extends under the cleaning element, and wherein the bottom side of the cleaning element extends at a lower level than the upper side of the upright wall for immersing the bottom side of the cleaning element in the cleaning fluid in use.

2. A conveyor according to claim 1, wherein the scraping edges (21; 121) extend at least over the entire width of the conveyor belt.

3. A conveyor according to claim 1 or 2, wherein the scraping edges (21; 121) extend parallel to the central axis of the cleaning element.

4. A conveyor according to any one of the preceding claims, wherein the parallel scraping edges (21; 121) are spaced apart by a distance of between 1 mm and 10 mm, further preferably between 3 mm and 8 mm.

5. A conveyor according to any one of the preceding claims, wherein the container is provided with an overflow edge (34) for keeping the cleaning fluid in the container at the level of the overflow edge.

6. A conveyor according to any one of the preceding claims, wherein the grooves (22; 122) are closed at their ends, preferably by a circumferential edge (23) which also retains at least the part of the conveyor belt that butts against the cleaning element.

7. A conveyor according to any one of the preceding claims, wherein the grooves (22; 122) extend parallel to the central axis of the cleaning element.

8. A conveyor according to any one of the preceding claims, wherein a row of passages (43) is provided in the wall of the supply member that surrounds the channel, which passages each extend from the channel to the outer side of the supply member and which are oriented in the direction of the conveyor belt.

9. A conveyor according to any one of the preceding claims, wherein the further fluid supplying means are provided directly above the container.

10. A conveyor according to any one of the preceding claims, wherein the conveyor belt is provided with cams (8) on the inner side, which cams are arranged in a regular pattern and wherein at least one rotatably driven pulley means is provided with recesses (9) in which the cams engage.

11. A conveyor according to any one of the preceding claims, wherein the conveyor belt does not extend through a cleaning bath.

12. A method for operating a conveyor according to any one of the preceding claims, wherein meat or fish products, are conveyed by the conveyor.

## Patentansprüche

1. Selbstreinigender Förderer (1) zum Fördern von Fleisch- oder Fischprodukten, umfassend ein endloses Förderband (2), das über eine Anzahl von Umlenkrollenmitteln (3a, 3b) geführt wird, Reinigungsmittel (5) zum Reinigen des Förderbandes, wobei die Reinigungsmittel ein zylindrisches Reinigungselement (12) umfassen, das in einer Drehrichtung um seine Mittelachse drehbar ist, gegen das das Förderband mit seiner Außenseite und Unterseite über die gesamte Breite stößt, Antriebsmittel (4) zum drehbaren Antreiben wenigstens eines Umlenkrollenmittels und des Reinigungselements, wobei das Reinigungselement umlaufend mit nach außen gerichteten Schabekanten (21; 121) versehen ist, die sich parallel zueinander erstrecken, um Abfallstoffe vom Förderband abzuschaben, wobei die Reinigungsmittel zudem Fluidzuführmittel (30) zum Zuführen von Reinigungsfluid zum Reinigungselement umfassen, wobei das Reinigungselement auch mit Nuten (22; 122) versehen ist, die sich zwischen den Schabekanten (21; 121) erstrecken, **dadurch gekennzeichnet, dass**
die Reinigungsmittel auch weitere Fluidzuführmittel (40) umfassen zum Zuführen von Reinigungsfluid stromabwärts des Reinigungselements gegen die volle Breite des Förderbandes an der Außenseite und der Unterseite davon, wobei die weiteren Fluidzuführmittel ein rohrförmiges Zuführelement umfassen, das gegen das Förderband über die gesamte Breite davon stößt, wobei im Inneren des Zuführelements ein Kanal (42) vorhanden ist, wobei wenigstens ein Durchlass (43) in der Wand des Zuführelements vorgesehen ist, welches den Kanal umgibt, wobei der Durchlass sich vom Kanal zur Außenseite des Zuführelements erstreckt und in Richtung des Förderbandes ausgerichtet ist, wobei die weiteren Fluidzuführmittel wenigstens teilweise direkt über dem Reinigungselement (12) angeordnet sind,
dass die Reinigungsmittel auch einen flexiblen Schaber (51) umfassen, der unter dem Förderband stromabwärts zum rohrförmigen Zuführelement vorgesehen ist, zum Trocknen des Förderbandes,
und dass die Fluidzuführmittel einen wannenartigen Behälter (30) für Reinigungsfluid umfasst, wobei der Behälter eine umlaufende aufrechte Wand aufweist und sich unter dem Reinigungselement erstreckt, und wobei sich die Unterseite des Reinigungselements auf einem niedrigeren Niveau als die Oberseite der aufrechten Wand erstreckt, um die Unterseite des Reinigungselements in das verwendete Reinigungsfluid einzutauchen.

2. Förderer nach Anspruch 1, wobei sich die Schabekanten (21; 121) wenigstens über die gesamte Breite des Förderbandes erstrecken.

3. Förderer nach Anspruch 1 oder 2, wobei sich die Schabekanten (21; 121) parallel zur Mittelachse des Reinigungselements erstrecken.

4. Förderer nach einem der vorhergehenden Ansprüche, wobei die parallelen Schabekanten (21; 121) um einen Abstand zwischen 1 mm und 10 mm, zudem vorzugsweise zwischen 3 mm und 8 mm beabstandet sind.

5. Förderer nach einem der vorhergehenden Ansprüche, wobei der Behälter mit einer Überlaufkante (34) versehen ist, um das Reinigungsfluid im Behälter auf dem Niveau der Überlaufkante zu halten.

6. Förderer nach einem der vorhergehenden Ansprüche, wobei die Nuten (22; 122) an ihren Enden geschlossen sind, vorzugsweise durch eine umlaufende Kante (23), die auch wenigstens den Teil des Förderbandes sichert, der gegen das Reinigungselement stößt.

7. Förderer nach einem der vorhergehenden Ansprüche, wobei sich die Nuten (22; 122) parallel zur Mittelachse des Reinigungselements erstrecken.

8. Förderer nach einem der vorhergehenden Ansprüche, wobei eine Reihe von Durchlässen (43) in der Wand des Zuführelements vorgesehen ist, welches den Kanal umgibt, wobei die Durchlässe sich jeweils vom Kanal zur Außenseite des Zuführelements erstrecken und in Richtung des Förderbandes ausgerichtet sind.

9. Förderer nach einem der vorhergehenden Ansprüche, wobei die weiteren Fluidzuführmittel direkt über dem Behälter vorgesehen sind.

10. Förderer nach einem der vorhergehenden Ansprüche, wobei das Förderband mit Nocken (8) an der Innenseite versehen ist, wobei die Nocken in einem regelmäßigen Muster angeordnet sind, und wobei wenigstens ein drehbar angetriebenes Umlenkrollenmittel mit Aussparungen (9) versehen ist, in die die Nocken eingreifen.

11. Förderer nach einem der vorhergehenden Ansprüche, wobei sich das Förderband nicht durch ein Reinigungsbad erstreckt.

12. Verfahren zum Betreiben eines Förderers nach einem der vorhergehenden Ansprüche, wobei Fleisch- oder Fischprodukte durch den Förderer gefördert werden.

## Revendications

1. Transporteur auto-nettoyant (1) pour transporter des produits carnés ou de la pêche, comprenant une bande transporteuse sans fin (2) qui est passée sur un certain nombre de moyens de poulie (3a, 3b), des moyens de nettoyage (5) pour nettoyer la courroie transporteuse, les moyens de nettoyage comprenant un élément de nettoyage cylindrique (12) qui peut tourner dans une direction de rotation autour de son axe central, contre lequel la bande transporteuse vient en butée sur toute la largeur avec son côté extérieur et son côté inférieur, des moyens d'entraînement (4) pour entraîner en rotation au moins un moyen de poulie et l'élément de nettoyage, dans lequel l'élément de nettoyage est pourvu sur sa circonférence d'arêtes de raclage orientées vers l'extérieur (21 ; 121) et s'étendant parallèlement les unes aux autres pour racler les déchets de la courroie transporteuse, dans lequel les moyens de nettoyage comprennent en outre des moyens d'alimentation en fluide (30) pour fournir un fluide de nettoyage à l'élément de nettoyage, dans lequel l'élément de nettoyage est également pourvu de rainures (22 ; 122) s'étendant entre les arêtes de raclage (21 ; 121),
**caractérisé en ce que**
les moyens de nettoyage comprennent également d'autres moyens d'alimentation en fluide (40) pour fournir le fluide de nettoyage en aval de l'élément de nettoyage sur toute la largeur de la bande transporteuse au niveau du côté extérieur et du côté inférieur de celui-ci, lesquels autres moyens d'alimentation en fluide comprennent un élément d'alimentation tubulaire qui vient en butée contre la bande transporteuse sur toute sa largeur, à l'intérieur de cet élément d'alimentation est présent un canal (42), dans lequel au moins un passage (43) est prévu dans la paroi de l'élément d'alimentation qui entoure le canal, lequel passage s'étend à partir du canal vers le côté extérieur de l'élément d'alimentation et qui est orienté dans la direction de la bande transporteuse, dans lequel les autres moyens d'alimentation en fluide sont au moins en partie prévus directement au-dessus de l'élément de nettoyage (12),
**en ce que** les moyens de nettoyage comprennent également un racloir flexible (51) prévu sous la courroie transporteuse, en aval de l'élément d'alimentation tubulaire, pour sécher la bande transporteuse,
et **en ce que** les moyens d'alimentation en fluide comprennent un récipient en forme d'auge (30) pour le fluide de nettoyage, lequel récipient a une paroi verticale circonférentielle et qui s'étend sous l'élément de nettoyage, et dans lequel le côté de fond de l'élément de nettoyage s'étend à un niveau inférieur à celui du côté supérieur de la paroi verticale pour immerger le côté de fond de l'élément de nettoyage dans le fluide de nettoyage en cours d'utilisation.

2. Transporteur selon la revendication 1, dans lequel les bords de raclage (21 ; 121) s'étendent au moins sur toute la largeur de la bande transporteuse.

3. Transporteur selon la revendication 1 ou 2, dans lequel les bords de raclage (21 ; 121) s'étendent parallèlement à l'axe central de l'élément de nettoyage.

4. Transporteur selon l'une quelconque des revendications précédentes, dans lequel les arêtes de raclage parallèles (21 ; 121) sont espacées d'une distance comprise entre 1 mm et 10 mm, de préférence encore entre 3 mm et 8 mm.

5. Transporteur selon l'une quelconque des revendications précédentes, dans lequel le récipient est pourvu d'un bord de trop-plein (34) pour maintenir le fluide de nettoyage dans le récipient au niveau du bord de trop-plein.

6. Transporteur selon l'une quelconque des revendications précédentes, dans lequel les rainures (22 ; 122) sont fermées au niveau de leurs extrémités, de préférence par un bord circonférentiel (23) qui retient également au moins la partie de la bande transporteuse qui vient en butée contre l'élément de nettoyage.

7. Transporteur selon l'une quelconque des revendications précédentes, dans lequel les rainures (22 ; 122) s'étendent parallèlement à l'axe central de l'élément de nettoyage.

8. Transporteur selon l'une quelconque des revendications précédentes, dans lequel une rangée de passages (43) est prévue dans la paroi de l'élément d'alimentation qui entoure le canal, lesquels passages s'étendent chacun à partir du canal vers le côté extérieur de l'élément d'alimentation et qui sont orientés dans la direction de la bande transporteuse.

9. Transporteur selon l'une quelconque des revendications précédentes, dans lequel les autres moyens d'alimentation en fluide sont prévus directement au-dessus du récipient.

10. Transporteur selon l'une quelconque des revendications précédentes, dans lequel la bande transporteuse est pourvue de cames (8) sur le côté intérieur, lesquelles cames sont agencées selon un motif régulier et où au moins un moyen de poulie entraîné en rotation est pourvu d'évidements (9) dans lesquels s'engagent les cames.

11. Transporteur selon l'une quelconque des revendications précédentes, dans lequel la bande transporteuse ne s'étend pas à travers un bain de nettoyage.

12. Procédé de fonctionnement d'un transporteur selon l'une quelconque des revendications précédentes, dans lequel des produits carnés ou de la pêche sont transportés par le transporteur.
